(19) **Europäisches Patentamt / European Patent Office / Office européen des brevets**

(11) **EP 3 657 151 B1**

(12) **EUROPEAN PATENT SPECIFICATION**

(45) Date of publication and mention
of the grant of the patent:
**01.05.2024 Bulletin 2024/18**

(21) Application number: **18835626.5**

(22) Date of filing: **19.07.2018**

(51) International Patent Classification (IPC):
**G01M 17/02** (2006.01)    **B60C 19/00** (2006.01)
**B60W 40/068** (2012.01)

(52) Cooperative Patent Classification (CPC):
**B60W 40/06; B60T 8/1725; B60W 40/064;**
B60T 2210/12; B60W 2050/0037; B60W 2050/0057;
B60W 2422/70; B60W 2520/28

(86) International application number:
**PCT/JP2018/027116**

(87) International publication number:
**WO 2019/017436 (24.01.2019 Gazette 2019/04)**

(54) **ROAD SURFACE CONDITION ESTIMATION METHOD AND ROAD SURFACE CONDITION ESTIMATION DEVICE**

VERFAHREN ZUR BEURTEILUNG DES STRASSENOBERFLÄCHENZUSTANDS UND VORRICHTUNG ZUR BEURTEILUNG DES STRASSENOBERFLÄCHENZUSTANDS

PROCÉDÉ D'ÉVALUATION D'ÉTAT DE REVÊTEMENT ROUTIER ET DISPOSITIF D'ESTIMATION D'ÉTAT DE REVÊTEMENT ROUTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2017 JP 2017140221**

(43) Date of publication of application:
**27.05.2020 Bulletin 2020/22**

(73) Proprietor: **Bridgestone Corporation**
**Tokyo 104-8340 (JP)**

(72) Inventor: **MASAGO Takeshi**
**Tokyo 104-8340 (JP)**

(74) Representative: **Marks & Clerk LLP**
**15 Fetter Lane**
**London EC4A 1BW (GB)**

(56) References cited:
**EP-A1- 1 897 706        EP-A1- 2 573 594**
**JP-A- 2010 032 355      JP-A- 2010 032 355**
**JP-A- 2010 159 031      JP-A- 2010 159 031**
**US-A1- 2011 199 201**

• **NISKANEN ARTO J ET AL: "Accelerometer tyre to estimate the aquaplaning state of the tyre-road contact", 2015 IEEE INTELLIGENT VEHICLES SYMPOSIUM (IV), IEEE, 28 June 2015 (2015-06-28), pages 343-348, XP033209748, DOI: 10.1109/IVS.2015.7225709 [retrieved on 2015-08-26]**

## Description

### TECHNICAL FIELD

The present invention relates to a method and a device for detecting infiltration of water between a tire and a road surface before shifting to a hydroplaning condition.

### BACKGROUND

There has been known that, when a tire travels on a wet road surface and if water infiltrates between the tire and the road surface, a gripping power of the tire is lowered since a part of the tire is caused not to be in contact with the road surface. When a water infiltration amount increases and the tire is caused to completely float, a hydroplaning phenomenon occurs, thus it becomes impossible to control a vehicle.

Conventionally, as a method for detecting a hydroplaning condition, there has been proposed a method in which a strain sensor is embedded in a tire tread to detect a vertical compressive stress $\sigma_2$ acting on a block having the strain sensor embedded therein, and a feature amount $(1 - S / S_0)$ that characterizes a strength of the hydroplaning condition is calculated from a time change of the vertical compressive stress $\sigma_2$ (see, for example, Patent Document 1). Attention is also drawn to the disclosures of JP2010-159031A and JP2010-032355A.

### CITATION DOCUMENT

Patent Document

Patent Document 1: Japanese Patent No. 5259245

### SUMMARY OF THE INVENTION

Technical Problem

However, there has been a problem that, in the method described in Patent Document 1, even though the strength of the hydroplaning condition can be detected, it is difficult to predict a precursor stage before entering the hydroplaning condition.

The present invention has been made in view of the conventional problem and aims at providing a method and a device for detecting a water infiltration condition between the tire and the road surface before entering the hydroplaning condition.

Solution to Problem

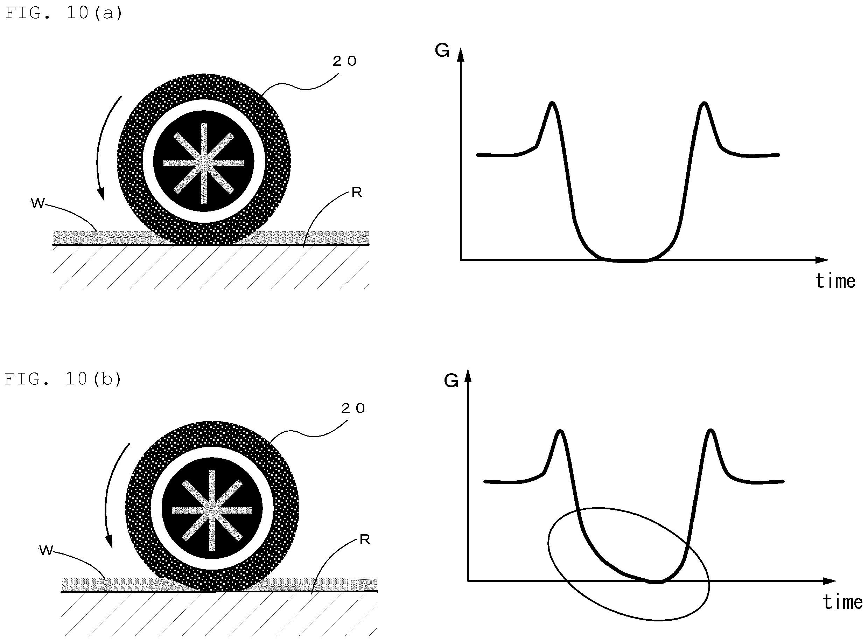

The inventor has found, as a result of earnest examinations, that even though a water film W exists on a road surface R as shown in Fig. 10 (a), if there is no water infiltration between a tire 20 and the road surface R (within a ground contact area), the tire 20 can exhibit a sufficient gripping power. Thus, an acceleration waveform in a tire radial direction detected by an acceleration sensor (not shown) installed in the tire 20 is substantially the same to that of a case when traveling on a dry road surface. However, as shown in Fig. 10(b), when a vehicle speed or a water depth increases, water infiltrates between the tire 20 and the road surface R, and a part of the tire 20 is caused not to be in contact with the ground, which results in change in a shape of a ground contact part of the acceleration waveform. Therefore, if information of this acceleration waveform is used, it is possible to detect the water infiltration condition between the tire 20 and the road surface R before entering the hydroplaning condition, and thus the inventors have reached the present invention.

Namely, the present invention provides a method for estimating a condition of a road surface on which a tire is traveling as claimed in claim 1.

The present invention also provides a device for estimating a condition of a road surface on which a tire is traveling as claimed in claims 6 and 7.

### BRIEF DESCRIPTION OF THE DRAWINGS

FIG. 1 is a diagram illustrating a configuration of a road surface condition estimation device according to a first embodiment of the present invention;
FIG. 2 is a diagram illustrating a mounting example of an acceleration sensor;
FIGs. 3(a) to 3(c) are diagrams illustrating examples of an acceleration waveform in the tire radial direction and a differential waveform;
FIG. 4 is a diagram illustrating a normalized acceleration waveform and a method for calculating a detection parameter;
FIG. 5 is a flow chart illustrating a road surface condition estimation method according to the present invention;
FIG. 6 is a diagram illustrating a configuration of a road surface condition estimation device according to a second embodiment of the present invention;
FIG. 7 is a diagram illustrating a normalized differential waveform and a method for calculating a detection parameter;
FIG. 8 is a diagram illustrating another example of the detection parameter in the normalized differential waveform;
FIG. 9 is a diagram illustrating another example of the detection parameter in the normalized differential waveform; and
FIGs. 10(a) and 10(b) are diagrams illustrating a change of the acceleration waveform in the tire radial direction caused by decrease in a gripping power due to water infiltration between the tire and the road surface.

DESCRIPTION OF EMBODIMENTS

First Embodiment

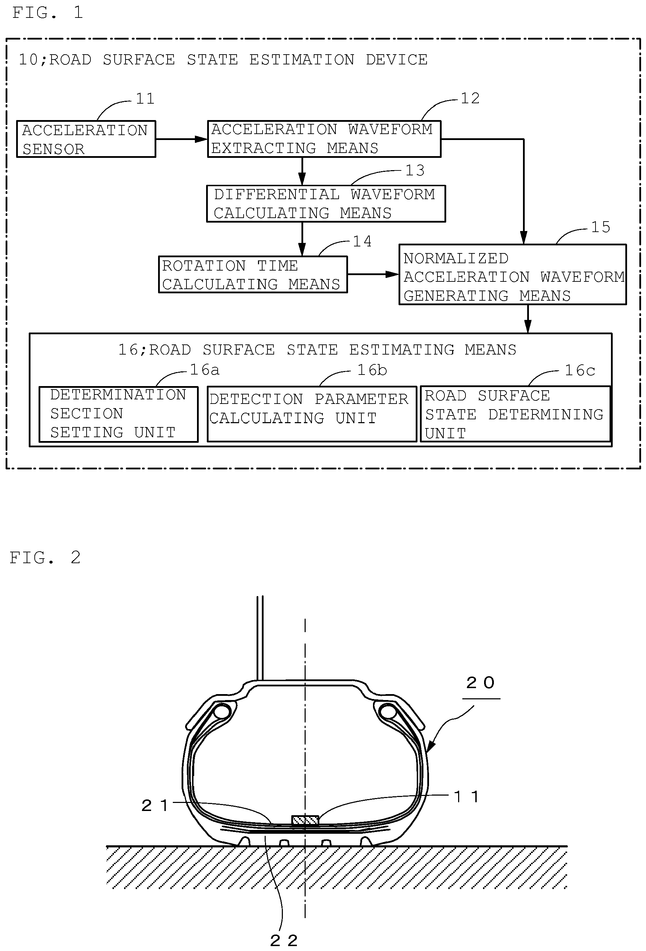

FIG. 1 is a functional diagram illustrating a configuration of a road surface condition estimation device 10 according to a first embodiment of the present invention. In FIG. 1, the reference sign 11 denotes an acceleration sensor, 12 denotes an acceleration waveform extracting means, 13 denotes a differential waveform calculating means, 14 denotes a rotation time calculating means, 15 denotes a normalized acceleration waveform generating means, and 16 denotes a road surface condition estimating means.

The acceleration waveform extracting unit 12 to the road surface condition estimating means 16 are each configured, for example, by computer software and a storage device such as a random access memory (RAM).

The acceleration sensor 11 is, as illustrated in Fig. 2, disposed on an inner liner portion 21 of the tire 20 at a central portion in a tire width direction so that a detection direction becomes the tire radial direction, to thereby detect acceleration in the tire radial direction input from the road surface to a tire tread 22.

The acceleration waveform extracting means 12 extracts the acceleration waveform that is a time-series waveform of the acceleration in the tire radial direction output from the acceleration sensor 11.

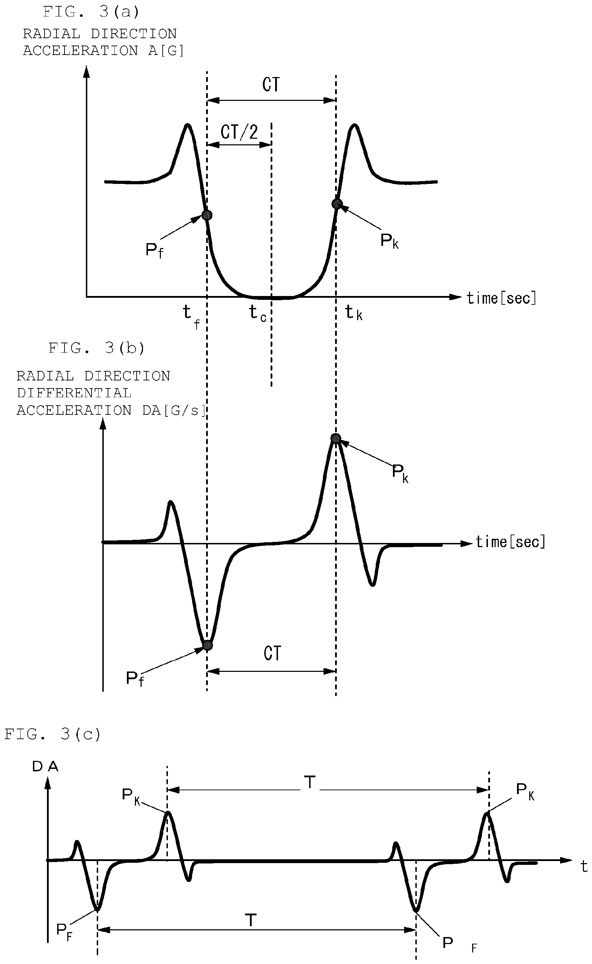

FIG. 3(a) is a diagram illustrating an example of the acceleration waveform (a case where there is no water infiltration between the tire and the road surface), in which the horizontal axis is time [sec.] and the vertical axis is the radial direction acceleration A[G]. The acceleration waveform has a peak before a step-in point $P_\varepsilon$ and a peak after a kick-out point $P_k$, respectively, and has a feature that a magnitude of acceleration becomes substantially zero in the vicinity of a ground contact center. The step-in point $P_\varepsilon$ is a point where inclination between two peaks becomes minimum (negative and an absolute values is maximum) and the kick-out point $P_k$ is a point where the inclination becomes maximum. Incidentally, positions (time) of the step-in point $P_\varepsilon$ and the kick-out point $P_k$ are normally obtained from the differential waveform to be described later.

The differential waveform calculating means 13 obtains, by calculation, the differential acceleration waveform in the tire radial direction that is the differential waveform of the acceleration waveform (hereinafter referred to as differential waveform). The differential waveform has, as illustrated in Fig. 3(b), a negative peak appearing at the step-in point $P_\varepsilon$ and a positive peak appearing at the kick-out point $P_k$, and has a feature that the inclination becomes substantially zero in the vicinity of the ground contact center. Incidentally, the vertical axis of the differential waveform is the radial direction differential acceleration $DA = dA / dt$.

The rotation time calculating means 14 calculates, from the differential waveform obtained by the differential waveform calculating means 13, a rotation time T of the tire, which is a time required for the tire 20 to rotate one rotation.

As shown in FIG. 3 (c), the rotation time T of the tire is obtained from an interval between two adjacent step-in points $P_\varepsilon$, or from an interval between two adjacent kick-out points $P_k$ of the differential waveform.

The normalized acceleration waveform generating means 15 generates, using the rotation time T of the tire 20 calculated by the rotation time calculating means 14, a normalized acceleration waveform that is formed by normalizing the acceleration waveform extracted by the acceleration waveform extracting means 12.

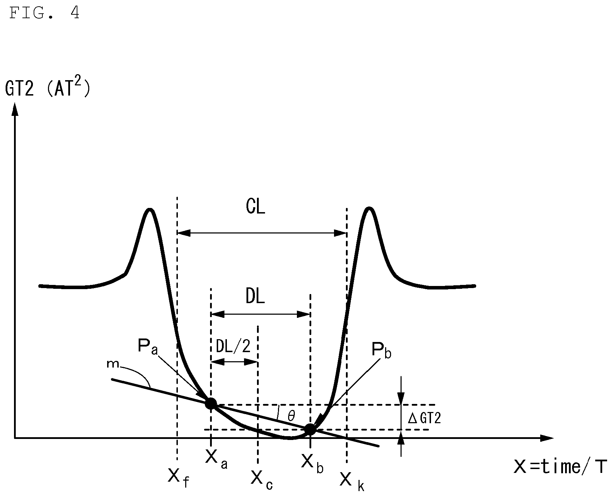

More concretely, as shown in FIG. 4, by normalizing the time of the horizontal axis (time) by the rotation time T, as $X = t / T$, the acceleration waveform is converted into a measurement position waveform whose horizontal axis corresponds to a position of the acceleration sensor 11. Incidentally, FIG. 4 illustrates the acceleration waveform in a case where water is infiltrating between the tire and the road surface.

For example, if a measurement position of the step-in point $P_\varepsilon$ is $X_{f1} = t_{f1} / T = 1$, a measurement position of a next step-in point $P_{f,+1}$ becomes $X_{f2} = (t_{f1} + T) / T = 1 + 1 = 2$.

Further, if a time interval between the step-in point $P_\varepsilon$ and the kick-out point $P_k$ is CT and $CT / T = CL$, a measurement position of the kick-out point $P_k$ becomes $X_{kn} = t_{kn} / T = X_{fn} + CL$. Furthermore, a measurement position of the ground contact center becomes $X_{cn} = X_{fn} + CL / 2$ (n = 1, 2, 3, ...).

Hereinafter, an explanation of the suffix n will be omitted.

Incidentally, the ground contact section becomes $[X_c - CL / 2, X_c + CL / 2]$.

Also, with respect to the vertical axis, the acceleration A(G) is multiplied by the square of the rotation time T. That is, because the acceleration A is a temporal differentiation of the speed, it is proportional to the square of the rotation time T. Therefore, if the vertical axis is defined as $GT2 = AT^2$, GT2 becomes an amount which does not depend on the speed (vehicle speed).

As described above, if the acceleration waveform is normalized by using the rotation time T of the tire 20, the vertical axis and the horizontal axis can take values that do not depend on the vehicle speed.

The road surface condition estimating means 16 includes a determination section setting unit 16a, a detection parameter calculating unit 16b and a road surface condition determining unit 16c, and determines, from the normalized acceleration waveform generated by the normalized acceleration waveform generating means 15, whether or not water infiltration condition between the tire 20 and the road surface R is in a condition to be shifted to the hydroplaning condition.

The determination section setting unit 16a sets a determination section that is a section of the normalized acceleration waveform to be used for determination. In the present embodiment, the center of the determination section is set to a ground contact center $X_c$ and, a section width is set to DL = C · CL.

CL is a time width of the ground contact area illustrated in FIGs. 3 (a) and 3(b), and C is a constant that satisfies $0.3 \leqq C \leqq 0.9$.

Therefore, the determination section becomes $[X_c - DL / 2, X_c + DL / 2]$.

C is set to 0.9 or less and 0.3 or more because, in either of cases where C is greater than 0.9 and where C is less than 0.3, a difference caused by the water infiltration condition in detection parameters to be described later becomes small.

The detection parameter calculating unit 16b calculates, from the normalized acceleration waveform in the determination section, a detection parameter for determining whether or not the condition of the road surface R is in a condition to be shifted to the hydroplaning condition.

In the present embodiment, as shown in FIG. 4, the detection parameter is a degree $\theta$ of a tilt angle of a straight line passing through the point $P_a$ at the end portion ($X_a = X_c - DL / 2$) on the step-in side and the point $P_b$ at the end portion ($X_a = X_c + DL / 2$) on the kick-out side of the normalized acceleration waveform.

$\theta$ can be expressed by the following formula (1).

$$\theta = \tan^{-1} (\Delta GT2 / DL) \ \ldots\ldots (1)$$

where, DL is the section width and $\Delta GT2$ is a difference $|GT2 (P_b) - GT2 (P_a)|$ between a normalized acceleration $GT2 (P_a)$ at the point $P_a$ and a normalized acceleration $GT2 (P_2)$ at the point $P_b$.

The road surface condition determining unit 16c compares the degree $\theta$ of the tilt angle with a preset threshold value $\theta_h$, and in a case where $\theta > \theta_h$, determines that the road surface condition is in a condition to be shifted to the hydroplaning condition, and in a case where $\theta \leqq \theta_h$, determines that the road surface condition has not reached the condition to be shifted to the hydroplaning condition.

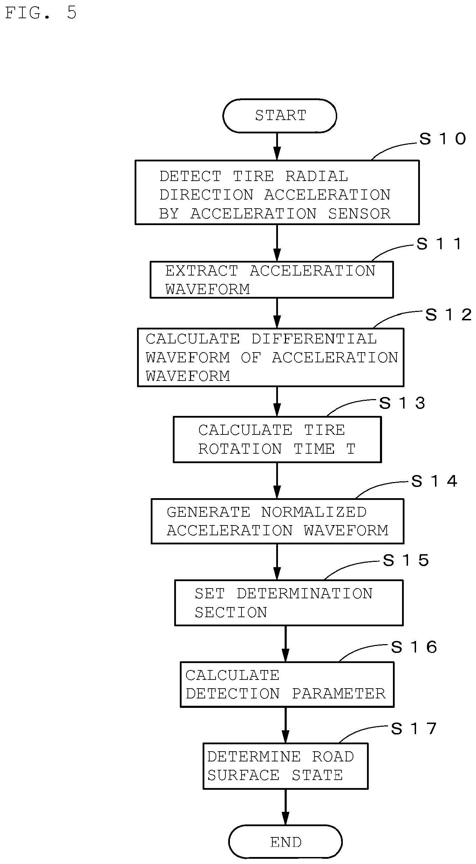

Next, the road surface condition estimation method according to the present invention will be described with reference to the flowchart of FIG. 5.

First, detecting by the acceleration sensor 11, the acceleration in the tire radial direction, which is input from the road surface to the tire tread 22 (step S10), then extracting the acceleration waveform from the detected acceleration in the tire radial direction (step S11).

Next, obtaining, by calculation, a differential waveform of the acceleration waveform (step S12), and from an interval between two step-in points $P_\epsilon$ of the differential waveform, calculating the rotation time T of the tire 20, which is a time required for the tire 20 to rotate for one rotation (step S13).

Then, generating, by using the rotation time T of the tire 20 calculated in the step S13, the normalized acceleration waveform that is formed by normalizing the acceleration waveform extracted in the step S11 (S14).

As described above, the horizontal axis of the normalized acceleration waveform is a measurement position X = t / T of the acceleration sensor, and the vertical axis is the normalized acceleration $GT2 = AT^2$.

Next, after setting a determination section that is a section to be used for determination of the normalized acceleration waveform (S15), calculating the detection parameter (step S16).

In the present embodiment, as the detection parameter, the degree $\theta$ of the tilt angle of the straight line m passing through the point $P_a$ at the end portion on the step-in side and the point $P_b$ at the end portion on the kick-out side of the normalized acceleration waveform, was used.

Finally, comparing the degree $\theta$ of the tilt angle with the preset threshold value $\theta_h$, and in the case where $\theta > \theta_h$, determining that the road surface condition is in the condition to be shifted to the hydroplaning condition, and in the case where $\theta \leqq \theta_h$, determining that the road surface condition has not reached the condition to be shifted to the hydroplaning condition (S17).

Second Embodiment

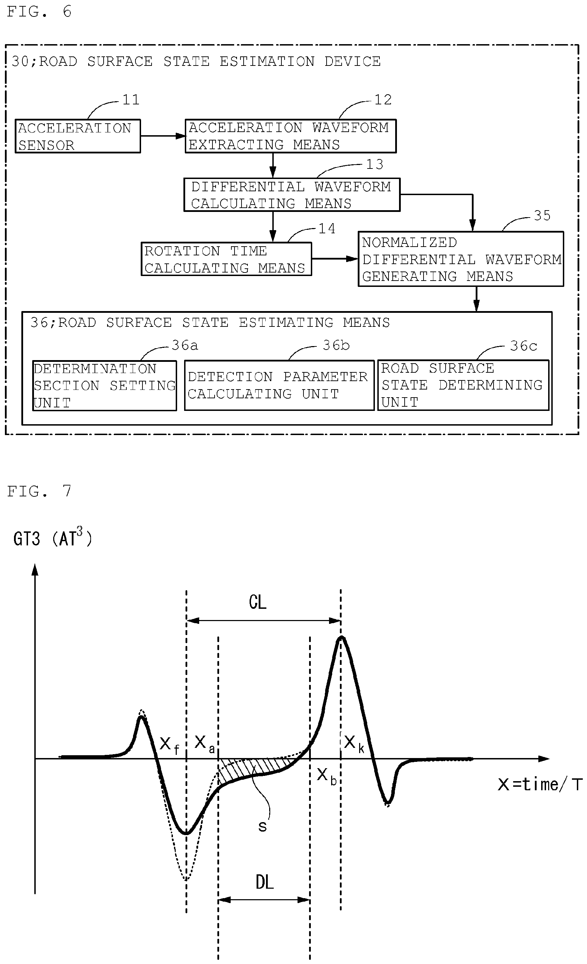

Figure 6 is a functional block diagram illustrating the configuration of a road surface condition estimating device 30 according to a second embodiment. The road surface condition estimating device 30 includes the acceleration sensor 11, the acceleration waveform extracting means 12, the differential waveform calculating means 13 , the rotation time calculating means 14, a normalized differential waveform generating means 35 and a road surface condition estimating means 36, and determines, by using the normalized differential waveform that is formed by normalizing the differential waveform, whether or not the road surface condition is in a condition to be shifted to the hydroplaning condition.

Explanations of the acceleration sensor 11 and the acceleration waveform extracting means 12 to the rotation time calculating means 14 are omitted, because the elements denoted by the reference signs same with those of the first embodiment have the configurations identical to those of the first embodiment.

The normalized differential waveform generating means 35 generates, by using the rotation time T of the tire 20 calculated in the rotation time calculating means 14, the normalized differential waveform that is formed by normalizing the differential waveform obtained by the differential waveform calculating means 13.

Specifically, as illustrated in FIG. 7, by normalizing the time of the horizontal axis (time) by the rotation time T, as X = t / T, the differential waveform is converted into a measurement position waveform, the horizontal axis being in correspondence with the position of the acceleration sensor 11, and the differential acceleration DA (G / sec.) of the vertical axis is multiplied by the cube of the rotation time T.

Incidentally, FIG. 7 illustrates the differential waveform in a case where water is infiltrating between the tire and the road surface.

Since the differentiation DA is the time differentiation, the differentiation DA is proportional to the cube of the rotation time T. Therefore, if the vertical axis is set to $GT3 = AT^3$, GT3 becomes an amount that does not depend on the speed (vehicle speed).

As such, if the differential waveform is normalized by using the rotation time T of the tire 20, the vertical axis and the horizontal axis can have values that do not depend on the vehicle speed, as similar to the normalized acceleration waveform of the first embodiment.

The road surface condition estimating means 36 includes a determination section setting unit 36a, a detection parameter calculating unit 36b and a road surface condition determining unit 36c, and determines, from the normalized differential waveform generated by the normalized differential waveform generating means 35, whether or not the water infiltration condition between the tire 20 and the road surface R is in a condition to be shifted to the hydroplaning condition.

The determination section setting unit 36a sets a determination section that is a section of the normalized differential waveform to be used for determination. In the present embodiment, as similar to the first embodiment, the determination section is set to $[X_c - DL / 2, X_c + DL / 2]$. Here, $X_c$ is the ground contact center and DL is the determination section width.

The detection parameter calculating unit 36b calculates, from the normalized differential waveform in the determination section, the detection parameter for determining whether or not the condition of the road surface R is in a condition to be shifted to the hydroplaning condition. In the present embodiment, as illustrated in FIG. 7, the integrated value size S from the end portion ($X_a = X_c - DL / 2$) on the step-in side to the end portion ($X_b = X_c + DL / 2$) on the kick-out side of the normalized differential waveform in the determination section was defined as the detection parameter. When water infiltrates between the tire 20 and the road surface R, a minus amount of the integration in the determination section increases, and thus the integrated value size S increases. Accordingly, by comparing the integrated value size S with a present threshold value $S_h$, it is possible to estimate a degree of the water infiltration between the tire 20 and the road surface R.

The road surface condition determining unit 36c determines that the water infiltration condition between the tire and the road surface is in a condition to be shifted to the hydroplaning condition, when the integrated value size S is larger than the preset threshold value $S_h$.

Although the present invention has been described using the embodiments, the technical scope of the present invention as defined by the claims is not limited to the scope described in the above embodiments. It is apparent to those skilled in the art that various modifications and improvements may be added to the above-described embodiments. It is also apparent from the claims that embodiments with such modifications or improvements may belong to the technical scope of the present invention defined by the claims.

For example, in the first embodiment, the detection parameter is set to $\theta = \tan^{-1} (\Delta GT2 / DL)$, however, the difference of the normalized acceleration $|GT2 (P_2) - GT2 (P_1)|$ may be used.

Further, in the first embodiment, $GT2 = AT^2$ was set by normalizing the vertical axis A[G] by the rotation time T. However, if the threshold $\theta_h$ is obtained for each rotation time T or if a map representing a relationship between the rotation time T and the threshold $\theta_h$ is obtained in advance, it is not necessary to normalize the vertical axis. The same applies to the second embodiment.

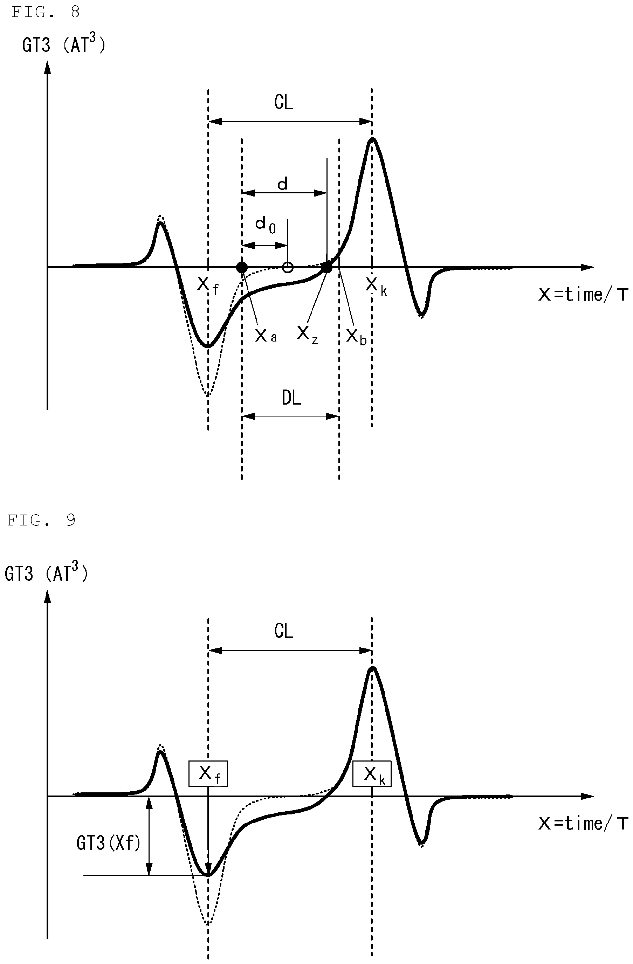

Moreover, in the second embodiment, the integrated value size S of the normalized differential waveform in the determination section was defined as the detection parameter. However, as illustrated in FIG. 8, when water infiltrates between the tire 20 and the road surface R, a distance $d = X_z - X_a$ between the end portion $X_a$ on the step-in side and a zero-cross point $X_z$ in the determination section of the normalized differential waveform increases. Thus, it is possible to determine, by using this distance d as the detection parameter, whether or not the water infiltration condition between the tire 20 and the road surface R is in the condition to be shifted to the hydroplaning condition.

Instead of the determination section, a distance $d' = X_z - X_f$ between the end portion $X\varepsilon$ on the step-in side and the zero-cross point $X_z$ in the ground contact section may be used as the detection parameter.

Alternatively, as illustrated in FIG. 9, when water infiltrates between the tire 20 and the road surface R, an absolute value level $|GT3 (X\varepsilon)|$ of the peak $P_f$ on the step-in side of the normalized differential waveform decreases. Therefore, it is possible to determine, by using the absolute value level $|GT3 (X\varepsilon)|$ as the detection parameter, whether or not the water infiltration condition between the tire 20 and the road surface R is in the condition to be shifted to the hydroplaning condition. In this case, the determination is made within the ground contact section.

Though the present invention has been described as above, the present invention can also be described as follows. That is, the present invention provides a method for estimating a condition of a road surface on which a tire is traveling as claimed in claim 1.

As such, since the water filtration condition between the tire and the road surface is estimated from the feature of the tire radial direction acceleration waveform normalized by using the rotation time or from the feature of the differential waveform that is formed by differentiating the tire radial direction acceleration waveform, it is possible to precisely predict whether or not the road surface condition is in the condition to be shifted to the hydroplaning condition, that is, a precursor condition before entering the hydroplaning condition.

Incidentally, the rotation time of the tire can be obtained from an interval between adjacent peaks on the step-in side or from an interval between adjacent peaks on the kick-out side of the differential waveform.

Further, the sixth step includes defining, as a determination area, an area that is 30% or more and 90% or less of a ground contact area, where the precursor condition before entering the hydroplaning condition is specifically prominent and determining, from the acceleration waveform or the differential waveform in the determination area, whether or not the water infiltration condition between the tire and the road surface is in the condition to be shifted to the hydroplaning condition. Thus, it is possible to effectively predict the precursor condition. In the meantime, the ground contact area means an area between the peak on the step-in side and the peak on the kick-out side of the differential waveform (or the normalized differential waveform),

Further, if the detection parameter is set to either one of, or a plurality of, or all of a degree $\theta$ of a tilt angle of a straight line passing through a point at an end portion on a step-in side and a point at an end portion on a kick-out side in the determination area of the normalized acceleration waveform, a distance d of a zero-cross point of the normalized differential waveform from the end portion on the step-in side in the determination area, and an integrated value size S from the end portion on the step-in side to the end portion on the kick-out side in the determination area of the normalized differential waveform, it is possible to precisely and certainly predict the water infiltration condition between the tire and the road surface.

Further, the same effect can be obtained even by using, as the detection parameter, the size of the peak value on the step-in side of the differential acceleration waveform.

Furthermore, the present invention provides a device for estimating a condition of a road surface on which a tire is traveling as claimed in claim 6.

By employing the configuration described above, it is possible to realize the device for estimating the condition of the road surface that can precisely predict the precursor condition before entering the hydroplaning condition.

Incidentally, by using the normalized differential waveform that is formed by normalizing the differential waveform, instead of the normalized acceleration waveform that is formed by normalizing the acceleration waveform, it is possible to precisely predict the precursor condition before entering the hydroplaning condition.

REFERENCE SIGN LIST

10: Road surface condition determination device, 11: Acceleration sensor, 12: Acceleration waveform extracting means, 13: Differential waveform calculating means, 14: Rotation time calculating mans, 15: Normalized acceleration waveform generating means, 16: Road surface condition estimating means, 16a: Determination section setting unit, 16b: Detection parameter calculating unit, 16c: Road surface condition determining unit, 20: Tire, 21: Inner liner portion, and 22: Tire tread.

**Claims**

1. A method for estimating a condition of a road surface (R) on which a tire (20) is traveling, the method comprising:

   a first step (S10) of detecting an acceleration in a tire radial direction to be input to the tire (20) by an acceleration sensor (11) installed in the tire (20);
   a second step (S11) of extracting, from the acceleration, an acceleration waveform that is a time-series waveform of the acceleration in the tire radial direction;
   a third step (S12) of obtaining a differential waveform of the acceleration waveform;
   a fourth step (S13) of calculating a rotation time of the tire (20) from the differential waveform
   a fifth step (S14) of generating, by using the rotation time, a normalized waveform that is formed by normalizing the acceleration waveform or the differential waveform; **characterised in that** the method further comprises
   a sixth step (S17) of determining, from the normalized waveform, whether or not a water infiltration condition between the tire (20) and the road surface (R) is in a condition to be shifted to a hydroplaning condition,
   wherein, the sixth step (S17) includes defining, as a determination area, an area that is 30% or more and 90% or less of a ground contact area in the normalized waveform, and determining, from the normalized waveform in the determination area, whether or not the water infiltration condition between the tire (20) and the road surface (R) is in the condition to be shifted to the hydroplaning condition.

2. The method for estimating a condition of a road surface (R) according to Claim 1, wherein, in a case where a degree $\theta$ of a tilt angle of a straight line passing through a point at an end portion on a step-in side and a point at an end portion on a kick-out side in the determination area of the acceleration waveform that is normalized in the fifth step (S14) is greater than a preset threshold value $\theta_h$, determination is made that the water infiltration condition between the tire (20) and the road surface (R) is in the condition to be shifted to the hydroplaning condition.

3. The method for estimating a condition of a road surface (R) according to Claim 1, wherein, in a case where a distance d of a zero-cross point of the differential waveform that is normalized in the fifth step (S14) from an end portion on a step-in side in the determination area is greater than a present threshold value $d_h$, determination is made that the water infiltration condition between the tire (20) and the road surface (R) is in the condition to be shifted to the hydroplaning condition.

4. The method for estimating a condition of a road surface (R) according to Claim 1, wherein, in a case where an integrated value size S from an end portion on a step-in side to an end portion on a kick-out side in the determination area of the differential waveform normalized in the fifth step (S14) is greater than a preset threshold value $S_h$, determination is made that the water infiltration condition between the tire (20) and the road surface (R) is in the condition to be shifted to the hydroplaning condition.

5. The method for estimating a condition of a road surface (R) according to Claim 1, wherein, from a size of a peak value on a step-in side of the differential waveform, determination is made as to whether or not the water infiltration condition between the tire (20) and the road surface (R) is in the condition to be shifted to the hydroplaning condition.

6. A device (10) for estimating a condition of a road surface (R) on which a tire (20) is traveling, the device (10) comprising:

an acceleration sensor (11) that is installed in the tire (20) and that detects acceleration in a tire radial direction;
an acceleration waveform extracting means (12) that extracts, from the acceleration, an acceleration waveform that is a time series waveform of the acceleration in the tire radial direction;
a differential waveform calculating means (13) that calculates a differential waveform of the acceleration waveform;
a rotation time calculating means (14) that calculates a rotation time of the tire (20) from the differential waveform;
a normalized acceleration waveform generating means (15) that generates, by using the rotation time of the tire (20), a normalized acceleration waveform that is formed by normalizing the acceleration waveform; **characterised in that** the device further comprises
a road surface condition estimating means (16) that determines whether or not a water infiltration condition between the tire (20) and the road surface (R) is in a condition to be shifted to a hydroplaning condition,
wherein, the road surface condition estimating means (16) defines, as a determination area, an area that is 30% or more and 90% or less of a ground contact area in the normalized acceleration waveform, and determines, from the normalized acceleration waveform in the determination area, whether or not the water infiltration condition between the tire (20) and the road surface (R) is in the condition to be shifted to the hydroplaning condition.

7. A device (30) for estimating a condition of a road surface (R) on which a tire (20) is traveling, the device (30) comprising:

an acceleration sensor (11) that is installed in the tire (20) and that detects acceleration in a tire radial direction;
an acceleration waveform extracting means (12) that extracts, from the acceleration, an acceleration waveform that is a time series waveform of the acceleration in the tire radial direction;
a differential waveform calculating means (13) that calculates a differential waveform of the acceleration waveform;
a rotation time calculating means (14) that calculates a rotation time of the tire (20) from the differential waveform;
a normalized differential waveform generating means (35) that generates, by using the rotation time, a normalized differential waveform that is formed by normalizing the differential waveform;
**characterised in that** the device further comprises
a road surface condition estimating means (36) that determines whether or not a water infiltration condition between the tire (20) and the road surface (R) is in a condition to be shifted to a hydroplaning condition,
wherein, the road surface condition estimating means (36) defines, as a determination area, an area that is 30% or more and 90% or less of a ground contact area in the normalized differential waveform, and determines, from the normalized differential waveform in the determination area, whether or not the water infiltration condition between the tire (20) and the road surface (R) is in the condition to be shifted to the hydroplaning condition.

**Patentansprüche**

1. Verfahren zum Einschätzen eines Zustands einer Fahrbahnoberfläche (R), auf der sich ein Reifen (20) fortbewegt, wobei das Verfahren Folgendes umfasst:

einen ersten Schritt (S10) des Ermittelns einer Beschleunigung in einer Reifenradialrichtung, die auf den Reifen (20) ausgeübt wird, durch einen im Reifen (20) installierten Beschleunigungssensor (11);

einen zweiten Schritt (S 11) des Extrahierens einer Beschleunigungswellenform, bei der es sich um eine Zeitreihenwellenform der Beschleunigung in der Reifenradialrichtung handelt, aus der Beschleunigung;

einen dritten Schritt (S12) des Erlangens einer differenziellen Wellenform der Beschleunigungswellenform;

einen vierten Schritt (S13) des Berechnens einer Umdrehungszeit des Reifens (20) aus der differenziellen Wellenform;

einen fünften Schritt (S14) des Erzeugens, durch Verwenden der Umdrehungszeit, einer normierten Wellenform, die durch Normieren der Beschleunigungswellenform oder der differenziellen Wellenform gebildet wird; **dadurch gekennzeichnet, dass** das Verfahren ferner Folgendes umfasst:

einen sechsten Schritt (S17) des Bestimmens aus der normierten Wellenform, ob ein Wassereindringzustand zwischen dem Reifen (20) und der Fahrbahnoberfläche (R) in einem Zustand ist, der in einen Aquaplaning-Zustand übergegangen hat, oder nicht,

wobei der sechste Schritt (S17) das Definieren eines Bereichs, der 30 % oder mehr und 90 % oder weniger eines Bodenberührungsbereichs in der normierten Wellenform beträgt, als einen Bestimmungsbereich, und das Bestimmen aus der normierten Wellenform im Bestimmungsbereich, ob der Wassereindringzustand zwischen dem Reifen (20) und der Fahrbahnoberfläche (R) in dem Zustand ist, der in den Aquaplaning-Zustand übergegangen hat, oder nicht, einschließt.

2. Verfahren zum Einschätzen eines Zustands einer Fahrbahnoberfläche (R) nach Anspruch 1, wobei in einem Fall, in dem ein Grad $\theta$ eines Neigungswinkels einer geraden Linie, die durch einen Punkt an einem Endabschnitt auf einer Seite der ersten Berührung und einen Punkt an einem Endabschnitt auf einer Seite der letzten Ablösung im Bestimmungsbereich der im fünften Schritt (S14) normierten Beschleunigungswellenform verläuft, größer als ein voreingestellter Schwellenwert $\theta_h$ ist, eine Bestimmung vorgenommen wird, dass der Wassereindringzustand zwischen dem Reifen (20) und der Fahrbahnoberfläche (R) in dem Zustand ist, der in den Aquaplaning-Zustand überzugehen hat.

3. Verfahren zum Einschätzen eines Zustands einer Fahrbahnoberfläche (R) nach Anspruch 1, wobei in einem Fall, in dem ein Abstand d eines Nulldurchgangspunkts der im fünften Schritt (S14) normierten differenziellen Wellenform von einem Endabschnitt auf einer Seite der ersten Berührung im Bestimmungsbereich größer als ein gegenwärtiger Schwellenwert $d_h$ ist, eine Bestimmung vorgenommen wird, dass der Wassereindringzustand zwischen dem Reifen (20) und der Fahrbahnoberfläche (R) in dem Zustand ist, der in den Aquaplaning-Zustand überzugehen hat.

4. Verfahren zum Einschätzen eines Zustands einer Fahrbahnoberfläche (R) nach Anspruch 1, wobei in einem Fall, in dem eine integrierte Wertgröße S von einem Endabschnitt auf einer Seite der ersten Berührung zu einem Endabschnitt auf einer Seite der letzten Ablösung im Bestimmungsbereich der im fünften Schritt (S14) normierten differenziellen Wellenform größer als ein voreingestellter Schwellenwert $S_h$ ist, eine Bestimmung vorgenommen wird, dass der Wassereindringzustand zwischen dem Reifen (20) und der Fahrbahnoberfläche (R) in dem Zustand ist, der in den Aquaplaning-Zustand überzugehen hat.

5. Verfahren zum Einschätzen eines Zustands einer Fahrbahnoberfläche (R) nach Anspruch 1, wobei aus einer Größe eines Spitzenwerts auf einer Seite der ersten Berührung der differenziellen Wellenform eine Bestimmung vorgenommen wird, ob der Wassereindringzustand zwischen dem Reifen (20) und der Fahrbahnoberfläche (R) in dem Zustand ist, der in den Aquaplaning-Zustand überzugehen hat, oder nicht.

6. Vorrichtung (10) zum Einschätzen eines Zustands einer Fahrbahnoberfläche (R), auf der sich ein Reifen (20) fortbewegt, wobei die Vorrichtung (10) Folgendes umfasst:

einen Beschleunigungssensor (11), der im Reifen (20) installiert ist und der eine Beschleunigung in einer Reifenradialrichtung ermittelt;

ein Mittel (12) zum Extrahieren einer Beschleunigungswellenform, das aus der Beschleunigung eine Beschleunigungswellenform extrahiert, bei der es sich um eine Zeitreihenwellenform der Beschleunigung in der Reifenradialrichtung handelt;

ein Mittel (13) zum Berechnen einer differenziellen Wellenform, das eine differenzielle Wellenform der Beschleunigungswellenform berechnet;

ein Mittel (14) zum Berechnen einer Umdrehungszeit, das aus der differenziellen Wellenform eine Umdrehungszeit des Reifens (20) berechnet;

ein Mittel (15) zum Erzeugen einer normierten Beschleunigungswellenform, das durch Verwenden der Umdrehungszeit des Reifens (20) eine normierte Beschleunigungswellenform erzeugt, die durch Normieren der Beschleunigungswellenform gebildet wird; **dadurch gekennzeichnet, dass** die Vorrichtung ferner Folgendes umfasst:

ein Mittel (16) zum Einschätzen eines Fahrbahnoberflächenzustands, das bestimmt, ob ein Wassereindringzustand zwischen dem Reifen (20) und der Fahrbahnoberfläche (R) in einem Zustand ist, der in einen Aquaplaning-Zustand überzugehen hat, oder nicht,

wobei das Mittel (16) zum Einschätzen eines Fahrbahnoberflächenzustands als einen Bestimmungsbereich einen Bereich definiert, der 30 % oder mehr und 90 % oder weniger eines Bodenberührungsbereichs in der normierten Beschleunigungswellenform beträgt, und aus der normierten Beschleunigungswellenform im Bestimmungsbereich bestimmt, ob der Wassereindringzustand zwischen dem Reifen (20) und der Fahrbahnoberfläche (R) in dem Zustand ist, der in den Aquaplaning-Zustand überzugehen hat, oder nicht.

**7.** Vorrichtung (30) zum Einschätzen eines Zustands einer Fahrbahnoberfläche (R), auf der sich ein Reifen (20) fortbewegt, wobei die Vorrichtung (30) Folgendes umfasst:

einen Beschleunigungssensor (11), der im Reifen (20) installiert ist und der eine Beschleunigung in einer Reifenradialrichtung ermittelt;

ein Mittel (12) zum Extrahieren einer Beschleunigungswellenform, das aus der Beschleunigung eine Beschleunigungswellenform extrahiert, bei der es sich um eine Zeitreihenwellenform der Beschleunigung in der Reifenradialrichtung handelt;

ein Mittel (13) zum Berechnen einer differenziellen Wellenform, das eine differenzielle Wellenform der Beschleunigungswellenform berechnet;

ein Mittel (14) zum Berechnen einer Umdrehungszeit, das aus der differenziellen Wellenform eine Umdrehungszeit des Reifens (20) berechnet;

ein Mittel (35) zum Erzeugen einer normierten differenziellen Wellenform, das durch Verwenden der Umdrehungszeit eine normierte differenzielle Wellenform erzeugt, die durch Normieren der differenziellen Wellenform gebildet wird; **dadurch gekennzeichnet, dass** die Vorrichtung ferner Folgendes umfasst:

ein Mittel (36) zum Einschätzen eines Fahrbahnoberflächenzustands, das bestimmt, ob ein Wassereindringzustand zwischen dem Reifen (20) und der Fahrbahnoberfläche (R) in einem Zustand ist, der in einen Aquaplaning-Zustand überzugehen hat, oder nicht,

wobei das Mittel (36) zum Einschätzen eines Fahrbahnoberflächenzustands als einen Bestimmungsbereich einen Bereich definiert, der 30 % oder mehr und 90 % oder weniger eines Bodenberührungsbereichs in der normierten differenziellen Wellenform beträgt, und aus der normierten differenziellen Wellenform im Bestimmungsbereich bestimmt, ob der Wassereindringzustand zwischen dem Reifen (20) und der Fahrbahnoberfläche (R) in dem Zustand ist, der in den Aquaplaning-Zustand überzugehen hat, oder nicht.

**Revendications**

**1.** Procédé pour estimer une condition d'une surface de route (R) sur laquelle un pneumatique (20) est en train de rouler, le procédé comprenant :

une première étape (S10) de détection d'une accélération dans une direction radiale de pneumatique à entrer sur le pneumatique (20) par un capteur d'accélération (11) installé dans le pneumatique (20) ;

une deuxième étape (S11) d'extraction, à partir de l'accélération, d'une forme d'onde d'accélération qui est une forme d'onde en série(s) temporelle(s) de l'accélération dans la direction radiale de pneumatique ;

une troisième étape (S12) d'obtention d'une forme d'onde différentielle de la forme d'onde d'accélération ;

une quatrième étape (S13) de calcul d'un temps de rotation du pneumatique (20) à partir de la forme d'onde différentielle ;

une cinquième étape (S14) de génération, par l'utilisation du temps de rotation, d'une forme d'onde normalisée qui est formée par la normalisation de la forme d'onde d'accélération ou de la forme d'onde différentielle ; **caractérisé en ce que** le procédé comprend en outre :

une sixième étape (S17) de détermination, à partir de la forme d'onde normalisée, de si oui ou non une condition d'infiltration d'eau entre le pneumatique (20) et la surface de route (R) est dans une condition à faire passer dans une condition d'hydroplanage,

dans lequel la sixième étape (S17) inclut la définition, en tant que zone de détermination, d'une zone qui est égale à 30 % ou plus et à 90 % ou moins d'une zone de contact au sol dans la forme d'onde normalisée, et la détermination, à partir de la forme d'onde normalisée dans la zone de détermination, de si oui ou non la condition d'infiltration d'eau entre le pneumatique (20) et la surface de route (R) est dans la condition à faire passer dans la condition d'hydroplanage.

2. Procédé pour estimer une condition d'une surface de route (R) selon la revendication 1, dans lequel, dans un cas où un degré θ d'un angle d'inclinaison d'une ligne droite qui passe par un point au niveau d'une partie d'extrémité sur un côté de premier contact et un point au niveau d'une partie d'extrémité sur un côté de dernier dégagement dans la zone de détermination de la forme d'onde d'accélération qui est normalisée dans la cinquième étape (S14) est supérieur à une valeur de seuil pré-établie $\theta_h$, il est déterminé que la condition d'infiltration d'eau entre le pneumatique (20) et la surface de route (R) est dans la condition à faire passer dans la condition d'hydroplanage.

3. Procédé pour estimer une condition d'une surface de route (R) selon la revendication 1, dans lequel, dans un cas où une distance d d'un point de passage par zéro de la forme d'onde différentielle qui est normalisée dans la cinquième étape (S14) par rapport à une partie d'extrémité sur un côté de premier contact dans la zone de détermination est plus grande qu'une valeur de seuil actuelle $d_h$, il est déterminé que la condition d'infiltration d'eau entre le pneumatique (20) et la surface de route (R) est dans la condition à faire passer dans la condition d'hydroplanage.

4. Procédé pour estimer une condition d'une surface de route (R) selon la revendication 1, dans lequel, dans un cas où une dimension de valeur intégrée S depuis une partie d'extrémité sur un côté de premier contact jusqu'à une partie d'extrémité sur un côté de dernier dégagement dans la zone de détermination de la forme d'onde différentielle normalisée dans la cinquième étape (S14) est plus grande qu'une valeur de seuil pré-établie $S_h$, il est déterminé que la condition d'infiltration d'eau entre le pneumatique (20) et la surface de route (R) est dans la condition à faire passer dans la condition d'hydroplanage.

5. Procédé pour estimer une condition d'une surface de route (R) selon la revendication 1, dans lequel, à partir d'une dimension d'une valeur de crête sur un côté de premier contact de la forme d'onde différentielle, il est déterminé si oui ou non la condition d'infiltration d'eau entre le pneumatique (20) et la surface de route (R) est dans la condition à faire passer dans la condition d'hydroplanage.

6. Dispositif (10) pour estimer une condition d'une surface de route (R) sur laquelle un pneumatique (20) est en train de rouler, le dispositif (10) comprenant :

un capteur d'accélération (11) qui est installé dans le pneumatique (20) et qui détecte une accélération dans une direction radiale de pneumatique ;
un moyen d'extraction de forme d'onde d'accélération (12) qui extrait, à partir de l'accélération, une forme d'onde d'accélération qui est une forme d'onde en série(s) temporelle(s) de l'accélération dans la direction radiale de pneumatique ;
un moyen de calcul de forme d'onde différentielle (13) qui calcule une forme d'onde différentielle de la forme d'onde d'accélération ;
un moyen de calcul de temps de rotation (14) qui calcule un temps de rotation du pneumatique (20) à partir de la forme d'onde différentielle ;
un moyen de génération de forme d'onde d'accélération normalisée (15) qui génère, par l'utilisation du temps de rotation du pneumatique (20), une forme d'onde d'accélération normalisée qui est formée par la normalisation de la forme d'onde d'accélération ; **caractérisé en ce que** le dispositif comprend en outre :
un moyen d'estimation de condition de surface de route (16) qui détermine si oui ou non une condition d'infiltration d'eau entre le pneumatique (20) et la surface de route (R) est dans une condition à faire passer dans une condition d'hydroplanage,
dans lequel le moyen d'estimation de condition de surface de route (16) définit, en tant que zone de détermination, une zone qui est égale à 30 % ou plus et à 90 % ou moins d'une zone de contact au sol dans la forme d'onde d'accélération normalisée, et détermine, à partir de la forme d'onde d'accélération normalisée dans la zone de détermination, si oui ou non la condition d'infiltration d'eau entre le pneumatique (20) et la surface de route (R) est dans la condition à faire passer dans la condition d'hydroplanage.

7. Dispositif (30) pour estimer une condition d'une surface de route (R) sur laquelle un pneumatique (20)

**EP 3 657 151 B1**

est en train de rouler, le dispositif (30) comprenant :

un capteur d'accélération (11) qui est installé dans le pneumatique (20) et qui détecte une accélération dans une direction radiale de pneumatique ;

un moyen d'extraction de forme d'onde d'accélération (12) qui extrait, à partir de l'accélération, une forme d'onde d'accélération qui est une forme d'onde en série(s) temporelle(s) de l'accélération dans la direction radiale de pneumatique ;

un moyen de calcul de forme d'onde différentielle (13) qui calcule une forme d'onde différentielle de la forme d'onde d'accélération ;

un moyen de calcul de temps de rotation (14) qui calcule un temps de rotation du pneumatique (20) à partir de la forme d'onde différentielle ;

un moyen de génération de forme d'onde différentielle normalisée (35) qui génère, par l'utilisation du temps de rotation, une forme d'onde différentielle normalisée qui est formée par la normalisation de la forme d'onde différentielle ;

**caractérisé en ce que** le dispositif comprend en outre :

un moyen d'estimation de condition de surface de route (36) qui détermine si oui ou non une condition d'infiltration d'eau entre le pneumatique (20) et la surface de route (R) est dans une condition à faire passer dans une condition d'hydroplanage,

dans lequel le moyen d'estimation de condition de surface de route (36) définit, en tant que zone de détermination, une zone qui est égale à 30 % ou plus et à 90 % ou moins d'une zone de contact au sol dans la forme d'onde différentielle normalisée, et détermine, à partir de la forme d'onde différentielle normalisée dans la zone de détermination, si oui ou non la condition d'infiltration d'eau entre le pneumatique (20) et la surface de route (R) est dans la condition à faire passer dans la condition d'hydroplanage.

FIG. 1

10; ROAD SURFACE STATE ESTIMATION DEVICE

```
┌──────────────┐    ┌────────────────────────┐
│ ACCELERATION │───▶│ ACCELERATION WAVEFORM  │──────────┐
│ SENSOR    11 │    │ EXTRACTING MEANS    12 │          │
└──────────────┘    └────────────────────────┘          │
                              │                          │
                              ▼                          │
                    ┌────────────────────────┐           │
                    │ DIFFERENTIAL WAVEFORM  │           │
                    │ CALCULATING MEANS   13 │           │
                    └────────────────────────┘           │
                              │                           │
                              ▼                           ▼
            ┌──────────────────┐    ┌────────────────────────────┐
            │ ROTATION TIME    │──▶ │ NORMALIZED              15  │
            │ CALCULATING   14 │    │ ACCELERATION WAVEFORM      │
            │ MEANS            │    │ GENERATING MEANS           │
            └──────────────────┘    └────────────────────────────┘
                                                  │
                                                  ▼
```

16; ROAD SURFACE STATE ESTIMATING MEANS

| DETERMINATION SECTION SETTING UNIT 16a | DETECTION PARAMETER CALCULATING UNIT 16b | ROAD SURFACE STATE DETERMINING UNIT 16c |

FIG. 2

FIG. 3(a)

RADIAL DIRECTION
ACCELERATION A[G]

CT

CT/2

$P_f$

$P_k$

$t_f$ $t_c$ $t_k$

time[sec]

FIG. 3(b)

RADIAL DIRECTION
DIFFERENTIAL
ACCELERATION DA[G/s]

$P_k$

time[sec]

CT

$P_f$

FIG. 3(c)

DA

$P_K$

T

$P_K$

t

$P_F$

T

$P_F$

FIG. 4

FIG. 5

```
                    ┌─────────────┐
                    │    START    │
                    └──────┬──────┘
                           │
                           ▼
        ┌──────────────────────────────┐  S10
        │ DETECT TIRE RADIAL           │
        │ DIRECTION ACCELERATION       │
        │ BY ACCELERATION SENSOR       │
        └──────────────┬───────────────┘
                       │
                       ▼
        ┌──────────────────────────────┐  S11
        │ EXTRACT ACCELERATION         │
        │ WAVEFORM                     │
        └──────────────┬───────────────┘
                       │
                       ▼
        ┌──────────────────────────────┐  S12
        │ CALCULATE DIFFERENTIAL       │
        │ WAVEFORM OF ACCELERATION     │
        │ WAVEFORM                     │
        └──────────────┬───────────────┘
                       │
                       ▼
        ┌──────────────────────────────┐  S13
        │ CALCULATE TIRE               │
        │ ROTATION TIME T              │
        └──────────────┬───────────────┘
                       │
                       ▼
        ┌──────────────────────────────┐  S14
        │ GENERATE NORMALIZED          │
        │ ACCELERATION WAVEFORM        │
        └──────────────┬───────────────┘
                       │
                       ▼
        ┌──────────────────────────────┐  S15
        │ SET DETERMINATION            │
        │ SECTION                      │
        └──────────────┬───────────────┘
                       │
                       ▼
        ┌──────────────────────────────┐  S16
        │ CALCULATE                    │
        │ DETECTION PARAMETER          │
        └──────────────┬───────────────┘
                       │
                       ▼
        ┌──────────────────────────────┐  S17
        │ DETERMINE ROAD               │
        │ SURFACE STATE                │
        └──────────────┬───────────────┘
                       │
                       ▼
                ┌─────────────┐
                │     END     │
                └─────────────┘
```

FIG. 6

30;ROAD SURFACE STATE ESTIMATION DEVICE

```
┌─────────────┐   ┌─────────────────────┐
│ 11          │   │ 12                  │
│ ACCELERATION│──▶│ ACCELERATION WAVEFORM│
│ SENSOR      │   │ EXTRACTING MEANS    │
└─────────────┘   └─────────────────────┘
                           │
                           ▼
                  ┌─────────────────────┐
                  │ 13                  │
                  │ DIFFERENTIAL WAVEFORM│
                  │ CALCULATING MEANS   │
                  └─────────────────────┘
                    │              │
                    ▼              ▼
          ┌───────────────┐  ┌──────────────────────┐
          │ 14            │  │ 35                   │
          │ ROTATION TIME │─▶│ NORMALIZED           │
          │ CALCULATING   │  │ DIFFERENTIAL WAVEFORM │
          │ MEANS         │  │ GENERATING MEANS     │
          └───────────────┘  └──────────────────────┘
```

36;ROAD SURFACE STATE ESTIMATING MEANS

| 36a DETERMINATION SECTION SETTING UNIT | 36b DETECTION PARAMETER CALCULATING UNIT | 36c ROAD SURFACE STATE DETERMINING UNIT |

FIG. 7

$GT3 \ (AT^3)$

$X = time/T$

16

FIG. 8

GT3 (AT$^3$)

FIG. 9

GT3 (AT$^3$)

17

FIG. 10(a)

FIG. 10(b)

**EP 3 657 151 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010159031 A
- JP 2010032355 A
- JP 5259245 B